(19) Europäisches Patentamt
European Patent Office
Office européen des brevets

(11) **EP 3 152 595 B1**

(12) **FASCICULE DE BREVET EUROPEEN**

(45) Date de publication et mention
de la délivrance du brevet:
**18.07.2018   Bulletin 2018/29**

(21) Numéro de dépôt: **15725365.9**

(22) Date de dépôt: **01.06.2015**

(51) Int Cl.:
***G01T 1/10*** *(2006.01)*

(86) Numéro de dépôt international:
**PCT/EP2015/062067**

(87) Numéro de publication internationale:
**WO 2015/185472 (10.12.2015 Gazette 2015/49)**

(54) **DISPOSITIF DE DETECTION DE RADIATIONS ET SYSTEME DE DETECTION ASSOCIE**

VORRICHTUNG ZUR DETEKTION VON STRAHLUNG UND ZUGEHÖRIGES
DETEKTIONSSYSTEM

DEVICE FOR DETECTING RADIATION AND ASSOCIATED DETECTION SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.06.2014   FR 1455032**

(43) Date de publication de la demande:
**12.04.2017   Bulletin 2017/15**

(73) Titulaire: **Commissariat à l'Énergie Atomique
et aux Énergies Alternatives
75015 Paris (FR)**

(72) Inventeurs:
• **MAGNE, Sylvain**
  **F-92320 Chatillon (FR)**
• **BOUDERGUI, Karim**
  **F-28630 Nogent-le-Phaye (FR)**
• **MAKIL, Hamid**
  **F-91380 Chilly-Mazarin (FR)**

(74) Mandataire: **Brevalex
95, rue d'Amsterdam
75378 Paris Cedex 8 (FR)**

(56) Documents cités:
EP-A1- 1 273 931        WO-A1-97/24631
FR-A1- 2 906 887        US-A1- 2006 138 330
US-A1- 2006 266 948     US-A1- 2009 321 650

## Description

Domaine technique et art antérieur

L'invention concerne un dispositif de détection de radiations ainsi qu'un système de détection apte à déterminer des radiations présentes dans une installation.

Les radiations concernées sont, par exemple, des photons d'énergie comprise entre 50KeV et 6MeV, voire plus, des électrons d'énergie supérieure au MeV, etc.

La protection radiologique des personnes qui interviennent en milieu électronucléaire est obligatoire dans le but de minimiser leur exposition. Le respect du principe ALARA (ALARA pour « As Low As Reasonably Achievable », soit « Aussi Bas que Raisonnablement Possible ») a des répercussions réglementaires, économiques et logistiques importantes sur l'organisation du travail.

Une dosimétrie individuelle est ainsi déployée à toutes les étapes du cycle d'un combustible, de sa préparation à la surveillance du fonctionnement d'une centrale, jusqu'au suivi de son assainissement en vue de son démantèlement et au stockage des déchets consécutifs à sa déconstruction. Les techniques de démantèlement (*i.e.* robotique, télé-opération, dosimétrie) ont progressé au cours du temps et permettent de déconstruire les infrastructures au plus tôt après mise à l'arrêt définitif en minimisant l'exposition des travailleurs. Une dosimétrie permet d'optimiser le stockage et la gestion des déchets, d'anticiper l'impact de l'assainissement sur le personnel d'intervention et de mettre au point un scénario de démantèlement optimisé en termes de logistique, coût et maîtrise des risques. En amont du cycle, la dosimétrie concerne le suivi d'activités d'infrastructures en opération (centrales, usines de production, etc.).

Le problème de la détection de la contamination existant dans les zones difficiles d'accès telles que, par exemple, les conduites de tuyauterie, est particulièrement important à résoudre. Le brevet US 5 665 972 divulgue des dispositifs qui mesurent la contamination dans des conduites de tuyauterie. Les mesures relevées sont des mesures à une dimension également nommées mesures 1-D. Dans la suite de la description, les abréviations respectives « 0-D », « 1-D » et « 2-D » seront fréquemment utilisées à la place des termes « ponctuel », « à une dimension » et « à deux dimensions ».

Un premier dispositif divulgué dans le brevet US 5 665 972 est représenté en figure 1. Il comprend un élément de détection 1 formé d'une pluralité de dosimètres thermo-luminescents, par exemple quatre dosimètres, insérés dans un support. L'élément de détection 1 est fixé sur ses parois latérales à des câbles métalliques souples 2. Deux disques 3a, 3b percés en leur centre sont disposés de part et d'autre de l'élément détecteur 1, les câbles métalliques souples 2 traversant les disques via leur perçage. Les disques 3a, 3b prennent appui sur la paroi intérieure de la conduite 4 dont la contamination est à mesurer. Les disques 3a, 3b ont pour objectif de maintenir l'élément de détection 1 sensiblement selon l'axe de la conduite à l'aide d'une pré-tension des câbles. Deux demi-tubes intercalaires $T_1$, $T_2$ sont placés en vis-à-vis sur la paroi intérieure de la conduite 4 afin de maintenir une distance minimale entre les deux disques. La détection de la contamination à l'intérieur de la conduite s'effectue par traction, en déplaçant l'élément détecteur 1 à l'intérieur de la conduite.

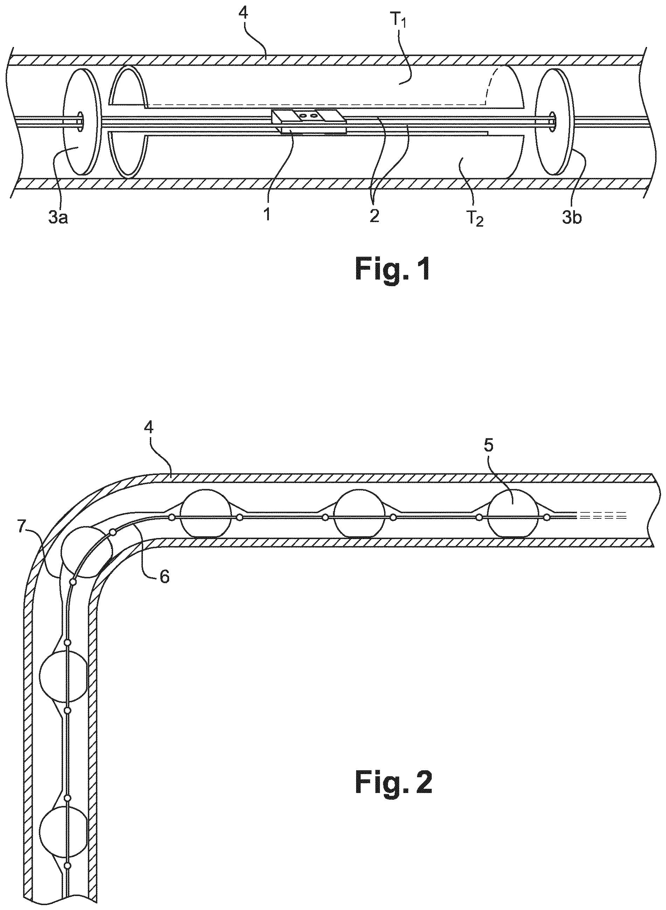

Le dispositif représenté en figure 1 présente des inconvénients. La présence des demi-tubes intercalaires $T_1$, $T_2$ exclut le franchissement de courbures. Ce dispositif ne peut donc être utilisé que dans des conduites rectilignes. Par ailleurs, les dosimètres thermo-luminescents ne permettent pas un usage opérationnel puisqu'ils nécessitent de démonter l'assemblage après chaque exposition, puis, de transmettre les dosimètres à un laboratoire spécialisé pour relever les mesures.

Un deuxième dispositif divulgué dans le brevet US 5 665 972 est représenté en figure 2.

Il comprend une série de détecteurs 5. Chaque détecteur 5 est constitué d'un détecteur Geiger-Muller miniature inséré dans une coquille de protection. Les coquilles sont reliées les unes aux autres par un câble porteur 6 constitués de deux câbles métalliques souples élémentaires, chaque câble métallique souple élémentaire ayant un diamètre de 1,6mm. Le câble porteur 6 a pour fonction de tracter l'ensemble des détecteurs dans la conduite 4 dont la contamination est à mesurer. Un câble électrique 7 relie les différents détecteurs 5 entre eux. Le câble électrique 7 a pour fonction d'alimenter les détecteurs Geiger-Muller en haute tension et de véhiculer les signaux de mesure.

Le dispositif de la figure 2 présente également des inconvénients. En effet, les détecteurs Geiger-Muller, même miniatures, demeurent relativement volumineux. Il n'est ainsi pas possible d'effectuer des mesures de débit de dose dans des conduites de très faible diamètre telles que, par exemple, des conduites de 8mm de diamètre. Un autre inconvénient des détecteurs Geiger-Muller est qu'ils nécessitent l'apport d'une haute tension et qu'ils sont « éblouis » par des débits de dose importants. Par ailleurs, la transmission d'un signal de mesure est perturbée dès lors que la longueur du câble est trop grande (par exemple, au-delà de 20m) et la résolution d'un détecteur Geiger-Muller miniature déporté par une grande longueur de câble est de l'ordre du mGy/h, ce qui n'est pas suffisant aux stades ultimes de la décontamination où le débit de dose atteint des valeurs de quelques µGy/h.

Un inconvénient commun des deux dispositifs de l'art antérieur décrit ci-dessus est qu'ils doivent être installés par traction, nécessitant alors la présence d'un accès à chacune des deux extrémités de la conduite à analyser. Un autre inconvénient commun des deux dispositifs est que les conduites concernées ont un diamètre relativement élevé, typiquement compris entre 25mm et 50mm.

L'invention ne présente pas les inconvénients mentionnés ci-dessus.

Exposé de l'invention

En effet, l'invention concerne un dispositif de détection de radiations comprenant au moins deux détecteurs de radiations distribués en série le long d'un câble support, chaque détecteur comprenant un élément de détection à luminescence stimulée optiquement (« Optically Stimulated Luminescence » ou OSL) couplé optiquement à au moins une fibre optique, chaque élément de détection OSL étant maintenu en vis-à-vis d'une première extrémité de la fibre optique par une pièce mécanique fixée sur le câble support, la pièce mécanique étant maintenue dans un câble flexible par des moyens de maintien, les deuxièmes extrémités de chaque fibre optique débouchant à une même première extrémité du câble flexible.

Selon le mode de réalisation préférentiel de l'invention, la pièce mécanique qui enserre le câble support comprend un premier alésage taraudé et un deuxième alésage alignés avec le premier alésage, l'élément de détection OSL étant fixé dans une vis elle-même vissée dans le premier alésage et la fibre optique étant fixée dans le deuxième alésage.

Selon une autre caractéristique supplémentaire de l'invention, les moyens de maintien comprennent un cylindre porteur fait d'une matière solide déformable sur lequel les fibres optiques sont enroulées, préférentiellement en hélice.

Selon encore une autre caractéristique supplémentaire de l'invention, une pluralité de fibres optiques sont couplées à un même élément de détection OSL, la pluralité de fibres optiques étant regroupées dans un tuyau capillaire sous la forme d'un faisceau de fibres optiques.

Selon encore une autre caractéristique supplémentaire de l'invention, une fibre optique contenant une pluralité de réseaux de Bragg (« Fiber Bragg Gratings » en langue anglaise) est insérée dans un tuyau capillaire (e.g. polyimide), puis enroulée de la même façon que les autres fibres optiques pour déboucher à la première extrémité du câble flexible.

Selon encore une autre caractéristique supplémentaire de l'invention, la deuxième extrémité du câble flexible, opposée à la première extrémité, est fermée par un embout. Dans un mode de réalisation particulier, l'embout comprend un microphone.

Selon encore une autre caractéristique supplémentaire de l'invention, le câble support est un fil multi-brins.

Selon encore une autre caractéristique supplémentaire de l'invention, le câble flexible est un tube métallique agrafé.

L'invention concerne également un système de détection de radiations dans une installation, le système comprenant un dispositif de détection de radiations selon l'invention et des moyens pour introduire par propulsion le dispositif de détection de radiations dans l'installation.

L'objet de l'invention est un câble flexible et de très faible diamètre (typiquement quelques millimètres) qui contient des détecteurs miniatures de taille millimétrique, voire sub-millimétrique, délivrant une cartographie linéaire (1-D), résistant aux radiations de niveaux élevés (typiquement plusieurs dizaines de kGy, voire plus) et pouvant être déportés sur une longue distance (typiquement plusieurs dizaines de mètres, voire plus).

Dans le cas des très faibles débits de dose, par exemple inférieurs à 10 $\mu$Gy/h, il est possible d'intégrer la dose sur une durée d'exposition de plusieurs heures, jours, semaines, voire mois, et ainsi d'obtenir un signal de dose exploitable (*i.e.* présentant un rapport signal sur bruit satisfaisant) pour en déduire un débit de dose moyen avec l'incertitude recherchée qui est généralement de l'ordre du pourcent.

Le mode opératoire qui résulte de l'utilisation du dispositif de détection de l'invention a un impact bénéfique sur l'organisation du travail. Les chantiers étant rarement opérationnels de nuit, la possibilité qu'offre le dispositif de l'invention d'une exposition nocturne permet en effet de réduire les contraintes d'organisation. Par ailleurs, l'intégralité du câble sensible peut être exposée de façon simultanée. A titre d'exemple non limitatif, seize lectures simultanées par jour correspondant à seize détecteurs répartis dans le câble flexible peuvent être effectuées. Il est alors possible de gagner du temps sur l'inspection de la totalité d'une infrastructure (conduite, cuves, bâtiment, etc.) par l'utilisation d'une pluralité de câbles conformes au câble de l'invention.

Selon le mode de réalisation préférentiel de l'invention, le dispositif de détection est constitué de détecteurs à luminescence stimulée optiquement ou détecteurs OSL (OSL pour « Optically Stimulated Luminescence ») couplés optiquement, chacun, à l'extrémité de fibres optiques servant, d'une part, à transmettre une lumière de stimulation optique jusqu'au détecteur OSL et, d'autre part, à collecter la luminescence émise par le détecteur OSL, qui résulte de l'exposition de celui-ci aux radiations. De façon avantageuse, la stimulation optique du détecteur OSL entraine simultanément l'émission de lumière OSL par le détecteur et la remise à zéro du détecteur.

De façon avantageuse également, le dispositif de détection de l'invention permet d'effectuer une mesure opérationnelle durant laquelle le câble peut être laissé en place durant la totalité de l'opération de lecture et de remise à zéro, laquelle s'effectue en ligne et à distance. Le câble flexible équipé d'une pluralité de détecteurs à fibres optiques est déposé à l'endroit où l'on souhaite relever les mesures d'activité (infrastructure, tuyau, cuve, etc.) et laissé en place, pendant une durée fixée par l'utilisateur en fonction de l'activité recherchée, la durée d'exposition étant d'autant plus élevée que le débit recherché est faible. Pour chacun des détecteurs contenus dans le câble flexible, les doses sont déduites des luminescences enregistrées suite à la stimulation optique. Une distribution de débit de dose moyen peut alors être déterminée sur toute la portée sensible du câble en établissant le quotient entre les doses mesurées et la durée d'exposition choisie.

Un autre avantage de l'invention est l'absence d'électronique dans le câble, celle-ci étant déportée à l'extérieur du câble, dans un coffret dédié. Par ailleurs, de façon avantageuse également, les détecteurs OSL ne sont pas thermalisés, ce qui conduit à faire l'économie d'une électronique de thermalisation.

La mesure optique étant naturellement immune aux perturbations électromagnétiques, le dispositif de l'invention permet de faire l'économie de câbles triaxiaux volumineux. Par ailleurs, la présence de détecteurs OSL miniatures et de faisceaux de fibres optiques de faibles diamètres conduit à optimiser le volume du dispositif de détection, permettant ainsi d'accroître la capacité de mesure pour un même diamètre externe de câble. A volume équivalent, il est alors possible de loger une pluralité de détecteurs OSL dans l'espace occupé par un seul capteur conventionnel de type CZT (CZT pour « Cadmium Zinc Telluride »).

Selon l'invention, la dynamique de mesure en termes de débit de dose évolue typiquement de quelques $\mu$Gy/h à environ 10 Gy/h, soit entre 5 à 7 ordres de grandeur (i.e. équivalent de 17 bits à 24 bits respectivement). Cette gamme de débit de dose est beaucoup plus élevée que celle des détecteurs conventionnels.

Selon un perfectionnement de l'invention, le profil de température le long du câble flexible est déterminé parallèlement au profil de débits de dose. En effet, dans le cas où la température n'est pas connue avec précision, une mesure du profil de température peut être effectuée par une ligne de réseaux de Bragg déployée le long du câble selon les procédés connus (c.f. S. Melle et al., « Practical fiber-optic Bragg grating strain gauge system », Appl. Opt., 32 (19), 1993, pp. 3601-3609). Il est alors possible de corriger l'influence de la température sur la mesure de dose. A titre d'exemple non limitatif, la correction peut être d'environ 0,3 %.K$^{-1}$ pour des cristaux d'alumine réduite.

Les capteurs OSL présentent une radiorésistance importante de sorte que le câble n'est pas démonté. Cette propriété garantit un gain de temps en opération mais aussi une économie de consommable pour l'exploitant puisque la durée de vie du câble peut être très importante (typiquement plusieurs années). Par ailleurs, la réponse des détecteurs OSL restant stable en fonction du temps, la durée qui sépare deux étalonnages consécutifs peut être longue. A titre d'exemple non limitatif, un étalonnage annuel suffit pour une exposition continue sous 1 Gy/h (calibrage tous les 10 kGy)).

Dans le cas où des cristaux d'alumine réduite sont utilisés comme éléments détecteurs OSL, l'émission OSL intervient aux alentours de 400nm pour une stimulation dans la gamme 480nm-550nm. La transmission d'une fibre optique à coeur de silice pure gainée fluor est typiquement de 50 dB/km (0,05 dB/m) à 400nm. Ainsi, le signal OSL est-il atténué par un facteur 1/2 sur une portée de 60m. En pratique, cela impose de doubler le temps d'intégration nécessaire au détecteur en bout de chaîne par rapport à celui d'un détecteur équivalent, connecté proche de l'instrumentation. Le câble flexible peut ainsi avantageusement présenter une longueur de 50 à 60 mètres, voire plus, afin de couvrir une grande variété d'applications d'assainissement.

Il est possible d'atteindre des portées plus importantes avec des détecteurs OSL émettant dans le rouge ou le proche Infra-Rouge (MgS :Ce,Sm ou Li$_2$B$_4$O$_7$-Mn par exemple). L'atténuation est alors de l'ordre de 8 dB/km de sorte que le signal OSL est atténué par un facteur 1/2 sur une portée de 400m à la longueur d'onde de 650nm. Un tel flexible OSL peut alors couvrir des étendues importantes compatibles avec des infrastructures de très grandes dimensions (usines, sites de stockage etc.).

Par opposition aux dispositifs 1-D divulgués dans le brevet US 5 665 972, l'originalité du dispositif de l'invention réside dans les éléments essentiels suivants :

- Il peut être inséré en conduite par propulsion, qui est le mode opératoire le mieux adapté sur un chantier puisque, fréquemment, un seul accès est disponible pour pénétrer une installation à inspecter,

- Il peut être inséré dans des conduites de diamètre inférieur à 1cm et présentant un rayon de courbure aussi faible que 3cm,

- Il est constitué de détecteurs OSL radiorésistants, pouvant endurer des doses de plusieurs dizaines de kGy sans variation significative de leur sensibilité, permettant ainsi d'envisager la réalisation d'un câble non démontable et de réponse en dose stable dans le temps,

- Il est naturellement préservé des perturbations électromagnétiques et des déports importants peuvent être envisagés,

- La gamme de débit de dose est importante (5 à 7 ordres de grandeur) compte-tenu de la combinaison de la gamme en dose (3 à 4 ordres) avec la gamme de temps d'intégration (2 à 3 ordres), le même câble pouvant ainsi être opérationnel en environnement très fortement "dosant" (typiquement 10 Gy/h) et faiblement "dosant" (typiquement 1 $\mu$Gy/h) en modifiant alors la durée d'exposition,

- La gamme en énergie de photons est importante (typiquement de 50keV à plus de 6MeV),

- Les fibres optiques présentent une «sur-longueur» qui permet d'accompagner la flexion de la structure mécanique du câble sans casser, et

- Dans un perfectionnement de l'invention, le dispositif de l'invention fournit des mesures de température associées aux mesures de débits de dose assurant ainsi, si nécessaire, une totale insensibilité de la mesure aux fluctuations de température.

Brève description des figures

D'autres caractéristiques et avantages de l'invention apparaîtront à la lecture d'un mode de réalisation préférentiel fait en référence aux figures jointes parmi lesquelles :

- La figure 1, déjà décrite, représente un premier dispositif de détection de radiations selon l'art antérieur;
- La figure 2, déjà décrite, représente un deuxième dispositif de détection de radiations selon l'art antérieur;
- La figure 3 représente un schéma de principe de dispositif de détection de radiations selon l'invention ;
- Les figures 4A-4D représentent des vues de détail du dispositif de détection de radiations de l'invention ;
- Les figures 5A et 5B représentent des éléments de fermeture du dispositif de détection de radiations de l'invention ;
- La figure 6 représente un schéma de principe d'une instrumentation de mesure de débit de dose associée au dispositif de détection de radiations de l'invention ;
- La figure 7 représente un système de détection de radiations dans une installation, le système utilisant un dispositif de détection de radiations conforme au dispositif de l'invention.

Sur toutes les figures, les mêmes références désignent les mêmes éléments.

Exposé détaillé de modes de réalisation de l'invention

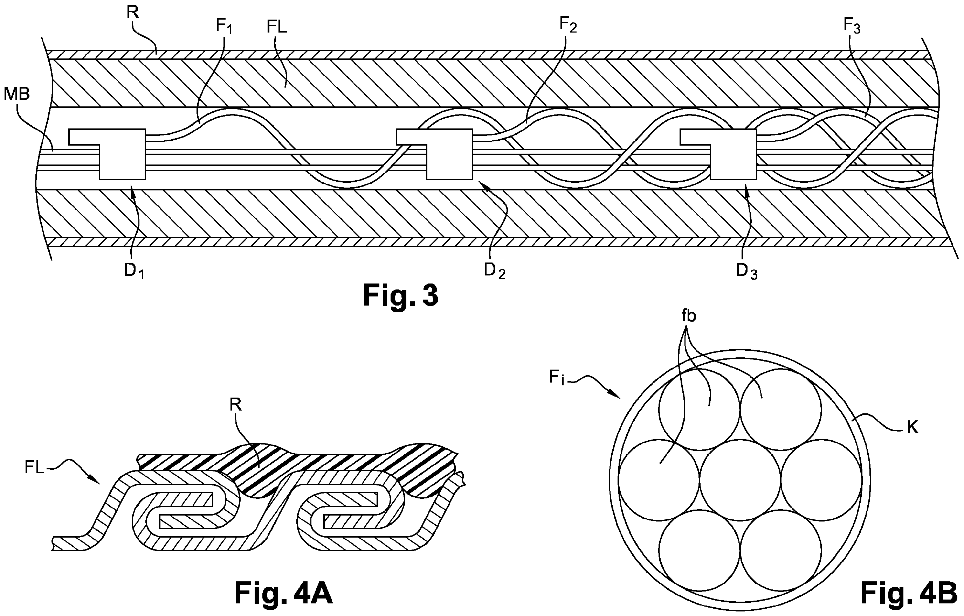

La figure 3 représente un schéma de principe des éléments essentiels qui constituent un dispositif de détection de radiations selon l'invention et les figures 4A-4D représentent des vues de détail du dispositif de détection de l'invention.

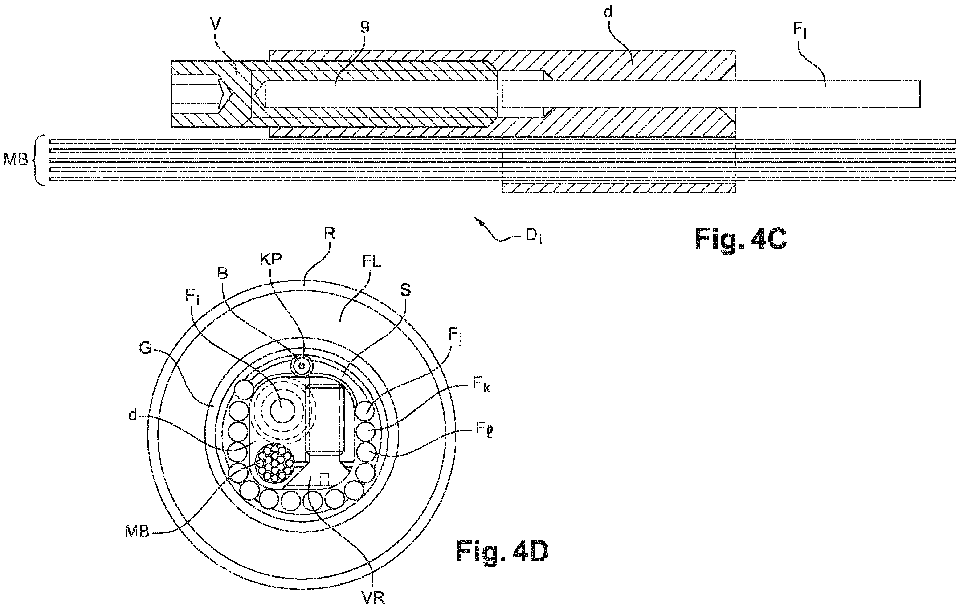

Le dispositif comprend un ensemble de détecteurs OSL $D_i$(i=1, 2, 3, etc.) placés dans un câble flexible FL. Les détecteurs $D_i$ sont reliés les uns aux autres à l'aide d'un câble support MB. Chaque détecteur $D_i$ est équipé d'un faisceau de fibres $F_i$. La figure 4C représente une vue longitudinale en coupe d'un détecteur $D_i$. La figure 4D représente une vue transversale en coupe de ce même détecteur.

Le câble flexible FL est préférentiellement un tube flexible métallique agrafé (« *interlocked hose* » en langue anglaise). Le tube flexible métallique agrafé peut être à simple agrafage ou à double agrafage. Le tube à simple agrafage présente une plus grande flexibilité et un plus grand rapport de diamètre intérieur/extérieur que le tube à double agrafage, mais sa résistance mécanique est moindre.

En pratique, pour des applications de démantèlement, un tube flexible à double agrafage tel que celui représenté, par exemple, en figure 4A est préféré. A titre d'exemple non limitatif, le tube flexible à double agrafage est réalisé en acier inoxydable et peut être décliné sur une large gamme de diamètres nominaux, typiquement compris entre 4 mm et 100 mm. Dans un mode de réalisation particulier de l'invention, le tube a, par exemple, un diamètre interne de 4,8mm et un diamètre externe de 8,5mm. Le rayon de courbure minimal du tube flexible est de 35mm. Son poids par unité de longueur est, par exemple, égal à 112 g/m. D'autres câbles peuvent également être utilisés tels que, par exemple, les gaines métalliques flexibles à base de tresse revêtue d'une couche de polychlorure de vinyle (PVC). De tels câbles flexibles métalliques sont élaborés à partir d'une bande métallique en acier inoxydable préformée. Etant donné que de tels câbles sont susceptibles d'être immergés, un revêtement polymère R est appliqué extérieurement, par exemple par enduction. Le revêtement R présente également l'avantage de faciliter les opérations de propulsion (réduction des frottements de par son caractère lisse) et de décontamination (contexte de démantèlement). Parmi les polymères utilisables pour le revêtement, le polyéthylène (PE) est préconisé en vertu de sa tenue en température (jusqu'à 105°C sous sa forme réticulée) et aux radiations, et de sa stabilité chimique satisfaisante, notamment vis-à-vis des acides utilisés pour l'assainissement.

Comme cela a été mentionné précédemment, un câble support MB relie les détecteurs $D_i$ les uns aux autres. Contrairement à l'art antérieur (cf. le brevet US 5 665 972), le câble support MB n'est pas utilisé pour déployer ou insérer les détecteurs à l'intérieur d'une conduite. Dans le cadre de l'invention, l'effort nécessaire pour déployer ou insérer les détecteurs dans les conduites est appliqué au seul câble flexible FL. Ce dernier peut avantageusement supporter un effort de propulsion sans flamber car, du fait de son diamètre, son moment de rigidité en flexion est beaucoup plus élevé que celui du câble support. Dans le cadre de l'invention, le câble support MB n'est utilisé que pour relier les détecteurs et maintenir un espacement constant entre eux.

L'encombrement du dispositif de détection de l'invention est principalement fonction du diamètre des faisceaux de fibres (généralement de l'ordre de 200 $\mu$m à 600 $\mu$m), lequel diamètre a un impact sur les performances de détection. Une capacité de mesure plus importante peut être atteinte en augmentant le diamètre du câble ou bien en réduisant le diamètre des faisceaux de fibres de collection (typiquement 100 $\mu$m). Le volume

occupé par un détecteur élémentaire $D_i$ et le signal optique recueilli sont deux paramètres évoluant en fonction du carré du diamètre du câble flexible FL. Ainsi, à diamètre de câble flexible constant, une augmentation de capacité d'un facteur 4 (64 fibres), par exemple, peut être atteinte par une réduction du diamètre des faisceaux par un facteur 2. La réduction de signal consécutive à cette réduction du diamètre impose alors d'augmenter le temps d'exposition par un facteur 4 pour conserver un rapport signal sur bruit identique. Dans le cadre de l'invention, les fibres optiques utilisées pour réaliser un faisceau de fibres ont un diamètre faible (typiquement 100 $\mu$m à 200 $\mu$m). Il est ainsi avantageusement possible de les enrouler facilement et de réduire les contraintes de courbure. A titre d'exemple non limitatif, un exemple de faisceau de fibres constitué de 7 fibres agencées selon une disposition hexagonale est donné en figure 4B. Les fibres fb sont assemblées par collage ou bien insérées dans un tuyau capillaire souple K formé à partir d'un polymère radio-résistant, par exemple le silicone, le polyuréthane, le polyéthylène ou le polypropylène. Il est également possible d'assembler un plus grand nombre de fibres de diamètre plus réduit, par exemple par faisceau de 19 fibres.

Avantageusement, les fibres fb sont à faible rapport de diamètre gaine/coeur (« *low core/clad ratio »* en langue anglaise) afin d'optimiser la collection de lumière. Les fibres optiques sont préférentiellement multimodes, de diamètre de coeur compris entre 100 $\mu$m et 200 $\mu$m et présentent, par exemple, une ouverture numérique (« numerical aperture » en langue anglaise) NA comprise entre 0,22 et 0,48.

Il est également possible d'utiliser des fibres multimodes à saut d'indice ou des fibres multimodes à gradient d'indice, revêtues d'un polymère dur tel que le polyimide. Ce polymère est appliqué en films minces (quelques dizaines de micromètres) et montre une bonne tenue aux radiations et en température.

La plupart des fibres sont également revêtues par d'autres polymères de type acrylate ou tefzel[R] qui sont alors éliminés sur les derniers centimètres pour former le faisceau de fibres. A titre d'exemples non limitatifs, les fibres multimodes à saut d'indice suivantes peuvent être utilisées :

- coeur 200 $\mu$m, gaine 225 $\mu$m, revêtement 500 $\mu$m, NA = 0,39,
- coeur 200 $\mu$m, gaine 230 $\mu$m, revêtement 500 $\mu$m, NA = 0,48,
- coeur 200 $\mu$m, gaine 230 $\mu$m, revêtement 500 $\mu$m, NA = 0,37 ou 0,43.

Quel que soit le type de fibre utilisée, un faisceau hexagonal de fibres présente une couverture plus réduite qu'une fibre unique ayant le diamètre externe du faisceau. Ainsi, pour une surface totale de 0.22 mm² couverte par sept fibres d'un faisceau hexagonal, la surface d'une fibre unique ayant le diamètre externe du faisceau correspondrait à 0.283 mm². La perte de surface est donc d'environ 30%. Cependant, la rigidité d'une fibre augmente en fonction du cube de son diamètre. Le faisceau hexagonal à 7 fibres présente alors une flexibilité 27 fois inférieure à celle d'une fibre unique de diamètre équivalent et est donc beaucoup plus facile à enrouler à l'intérieur du câble flexible.

Par ailleurs, pour un rayon de courbure donné, les contraintes de courbures évoluent proportionnellement au diamètre de la fibre. Ainsi, les contraintes appliquées au faisceau de fibres sont-elles trois fois plus réduites que pour une fibre unique. En pratique, la déformation appliquée à une fibre doit rester très inférieure au pourcent pour réduire les risques de cassure. La déformation par courbure correspond au diamètre de la fibre divisé par deux fois son rayon de courbure. Pour une fibre de 200$\mu$m de diamètre et un rayon de courbure minimal de 30mm, la déformation maximale générée par la courbure est d'environ 0,33 %, ce qui est acceptable.

La figure 4C représente une vue en coupe longitudinale d'un détecteur $D_i$ et la figure 4D représente une vue en coupe transversale du câble flexible au niveau d'un détecteur $D_i$.

Un cristal détecteur OSL 9 est placé en vis-à-vis de l'extrémité d'un faisceau de fibres optiques $F_i$. Le cristal détecteur 9 et le faisceau de fibres $F_i$ sont placés, l'un en face de l'autre, dans deux alésages concentriques d'une pince d. Un premier alésage accueille le faisceau de fibres optiques $F_i$ et a, en conséquence, un diamètre requis pour accueillir le faisceau de fibres, par exemple 0,6mm. Le second alésage est taraudé et accueille une vis sans tête V, par exemple en inox, qui contient le cristal détecteur 9. Le cristal détecteur 9 est fixé en fond de trou, par exemple par une colle de type époxy présentant une tenue mécanique satisfaisante aux radiations. Le faisceau de fibres $F_i$ est également fixé dans sa monture, par exemple à l'aide d'une colle de type époxy. Ce procédé de couplage entre le cristal détecteur 9 et le faisceau de fibres $F_i$ permet de laisser un très faible intervalle d'air entre le cristal et le faisceau de fibres. Il est également possible que le cristal détecteur 9 et l'extrémité du faisceau de fibres $F_i$ soient en contact l'un avec l'autre. En pratique, il existe une petite épaisseur d'air de quelques dizaines de micromètres entre le cristal détecteur 9 et l'extrémité du faisceau de fibres $F_i$ en raison de leur état de surface.

Chaque pince est, par exemple, usinée dans un parallélépipède en acier inoxydable de dimensions 3 x 3 x 10 mm³ environ. Le parallélépipède en acier est, par exemple, usiné par tournage sur une première partie et percé par un trou d'un diamètre équivalent à celui du câble support, par exemple un diamètre de 1mm, sur une deuxième partie. Sur cette deuxième partie, le parallélépipède en acier est également rainuré sur toute une demi-longueur afin de former une pince. Le câble support MB est alors engagé dans le trou et la pince serrée sur le câble support par deux vis VR, par exemple, en inox. Alternativement, il est possible de solidariser chaque pince au câble support MB par soudage.

A titre d'exemple non limitatif, le câble support MB est constitué d'un fil multi-brins en acier inoxydable (*e.g.* Ø = 1 mm), de module d'élasticité proche de 200 GPa. Une force de traction maximale de l'ordre de 400 N (40 kg), correspondant à une contrainte de 400 MPa, peut alors être appliquée dans la limite élastique de 0,2 %.

Pour optimiser la répartition des faisceaux de fibres dans le câble flexible FL, les différentes pinces peuvent se succéder avec des orientations angulaires variables, par exemple en spirale, le long du câble support MB.

La longueur des pinces peut avantageusement être conçue en fonction de la courbure minimale qu'il est nécessaire d'assurer au câble flexible FL. A titre d'exemple non limitatif, pour un rayon de courbure minimal souhaité égal à 30mm d'un câble flexible FL de diamètre interne égal à 4 mm, la longueur d'un segment linéaire ne doit pas excéder 20 mm. Des pinces de 10mm de longueur peuvent alors être choisies pour ne pas gêner la courbure du câble flexible en opération.

La figure 4D représente une vue en coupe transversale du câble flexible au niveau d'un détecteur $D_i$. Les faisceaux de fibres $F_j$, $F_k$, $F_l$, etc. qui proviennent des détecteurs respectifs $D_j$, $D_k$, $D_l$, etc. (non représentés sur la figure) sont enroulés, préférentiellement en spirale, sur un cylindre porteur S fait d'une matière solide déformable, par exemple un cylindre de mousse, qui entoure la pince d (le cylindre S n'est pas représenté sur la figure 3 pour des raisons de commodité).

Les faisceaux de fibres $F_j$, $F_k$, $F_l$, etc. sont répartis sur le cylindre porteur S qui est positionné entre la paroi intérieure du câble flexible FL et la pince d. La paroi intérieure du câble FL est, préférentiellement, recouverte d'une pellicule de graisse G apte à permettre le mouvement des faisceaux de fibres. Les faisceaux de fibres sont enroulés sur le cylindre porteur S avant le montage des détecteurs dans le câble flexible FL. En fonctionnement, le cylindre porteur S n'oppose avantageusement pas de résistance aux mouvements des fibres.

Dans un mode de réalisation particulier de l'invention, des réseaux de Bragg B sont photo-inscrits dans une fibre monomode conventionnelle, laquelle fibre est insérée dans un capillaire enroulé, à la manière des faisceaux de fibres optiques, autour du cylindre porteur S. Chaque réseau de Bragg B est placé au plus près d'un cristal détecteur 9. De façon connue en soi, les réseaux de Bragg servent à mesurer la température des cristaux détecteurs 9. Chaque réseau de Bragg est photo-inscrit à une longueur d'onde de Bragg différente qui permet d'identifier sa position dans le flexible.

Le comportement en flexion du câble détecteur de l'invention est décrit ci-après, dans le cas où le diamètre interne du câble flexible est, par exemple, égal à 4mm. Dans ce cas, la différence de rayon de courbure entre deux faisceaux de fibres situés aux deux extrémités d'un diamètre interne du câble flexible aligné avec le rayon de courbure du câble flexible est sensiblement égale à 4mm.

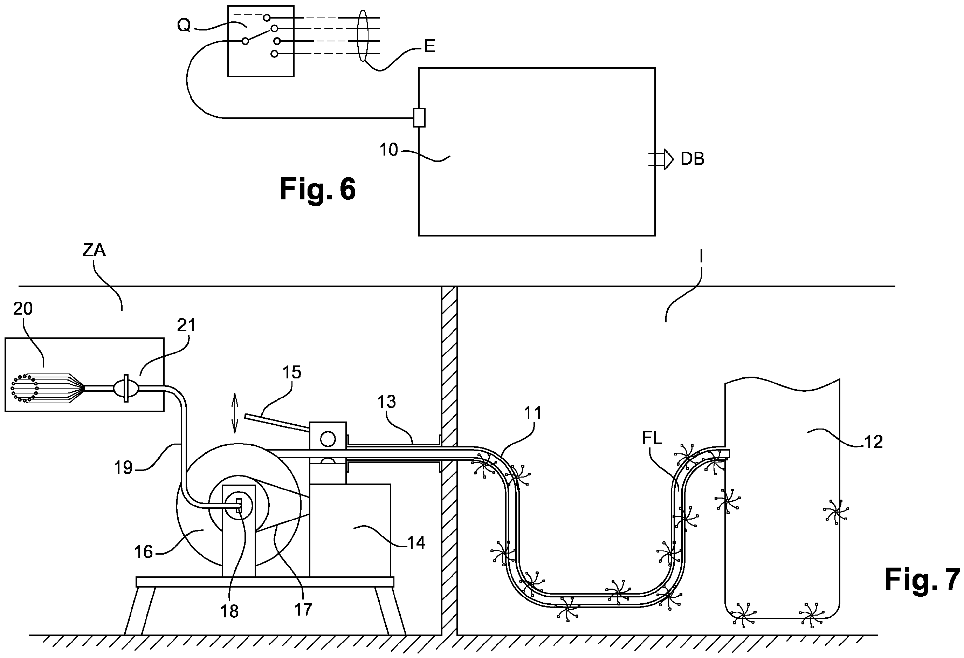

Le faisceau de fibres le plus éloigné du centre du rayon de courbure parcourt alors une distance plus élevée que l'autre faisceau de fibres, à raison de sensiblement 25mm par tour complet de câble FL. Concrètement, le pire des cas correspond à la situation de stockage pour laquelle le câble flexible est toujours enroulé dans le même sens (cf. Figure 7). Pour l'enroulement d'un câble de 20m de long sur un touret de stockage ayant un rayon de 150mm, 21 tours sont nécessaires pour enrouler le câble complet sur le touret. Le décalage de longueur entre les deux faisceaux de fibres situés aux deux extrémités du diamètre interne du câble est alors sensiblement égal à 525 mm (i.e. 21x25mm).

Selon le mode de réalisation préférentiel de l'invention, les faisceaux de fibres sont enroulés en hélice autour de l'axe du câble flexible. Pour une longueur donnée d'une fraction rectiligne du câble flexible, chaque faisceau de fibre a en conséquence une longueur supérieure à la longueur de la fraction rectiligne du câble. Dans la suite de la description, la différence entre la longueur du faisceau de fibre et la longueur de la fraction rectiligne du câble qui lui correspond est appelée « surlongueur ». Dans le cas où le diamètre interne du câble est sensiblement égal à 4mm, les hélices ont, par exemple, un pas de l'ordre de 50 à 60mm. Selon cette configuration, la sur-longueur obtenue par enroulement en hélice est d'environ 1,55mm par pas de 50 mm, soit une sur-longueur de 31mm/m qui est alors suffisante pour enrouler le câble sur un touret de 150 mm de rayon sans risque de détérioration.

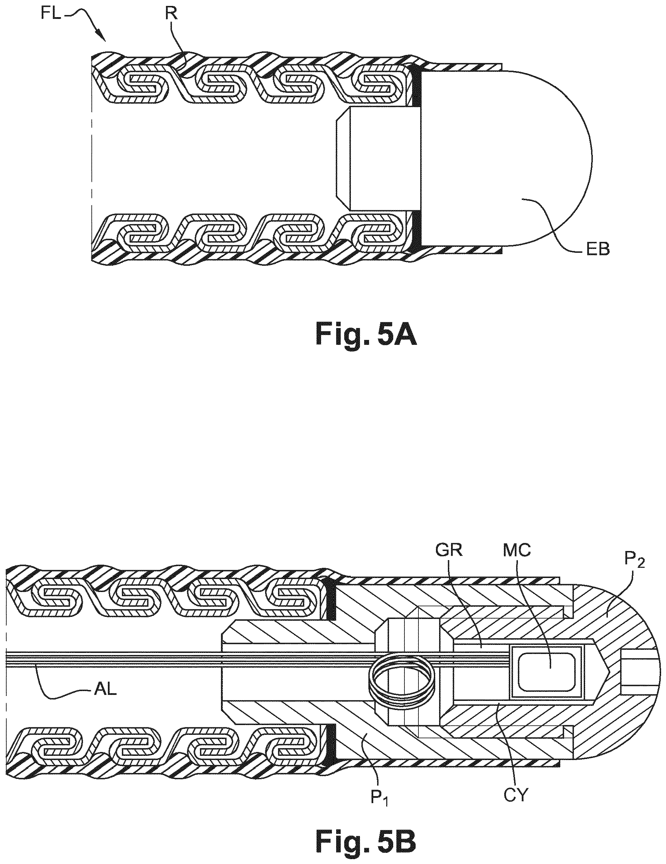

La réalisation du dispositif de détection de l'invention va maintenant être décrite. L'ensemble des détecteurs $D_i$ et des faisceaux de fibres $F_i$ sont tout d'abord enroulés sur le cylindre porteur et recouverts de graisse pour, d'une part, faciliter leur insertion dans le câble flexible et, d'autre part, faciliter le mouvement des fibres à l'intérieur du câble lors des opérations ultérieures de décontamination. Un tire-fil sous forme de tige rigide, de longueur sensiblement égale à celle du câble flexible FL, est ensuite raccordé au câble support et introduit dans le câble flexible, au niveau d'une première extrémité du câble flexible. Le câble flexible est maintenu rectiligne lors de l'introduction du tire-fil. Le tire-fil est ensuite sorti du câble flexible, à l'extrémité du câble flexible opposée à la première extrémité, entrainant ainsi l'ensemble des détecteurs $D_i$ à l'intérieur du câble. Une fois l'ensemble des détecteurs $D_i$ placés à l'intérieur du câble flexible, le tire-fil est retiré et un embout de protection et d'étanchéité est positionné à l'extrémité du câble flexible située à l'opposé de l'extrémité par laquelle sortent les faisceaux de fibres. Cet embout est détaillé ci-dessous en référence aux figures 5A et 5B. Au niveau de l'embout d'étanchéité, le câble support MB est sectionné et l'extrémité de celui-ci est préférentiellement laissée libre. A l'extrémité du câble flexible FL située à l'opposé de l'embout, les faisceaux de fibres $F_i$, $F_j$, $F_k$, $F_l$, etc., le capillaire KP et le câble support MB sont reliés à une bride comme cela est détaillé en référence aux figures 6 et 7 ci-dessous.

Les figures 5A et 5B représentent des éléments de fermeture du câble flexible.

La figure 5A représente un élément de fermeture de câble flexible selon un premier mode de réalisation de l'invention. A titre d'exemple non limitatif, l'élément de fermeture est un bouchon en acier EB qui est soudé à l'extrémité du câble flexible FL. Le bouchon en acier permet d'encaisser les chocs du câble lors de la progression de celui-ci dans une conduite.

La figure 5B représente un élément de fermeture de câble flexible selon un deuxième mode de réalisation de l'invention. L'élément de fermeture selon le deuxième mode de réalisation de l'invention comprend un microphone MC. Une première partie $P_1$ de l'élément de fermeture est une monture, préférentiellement en acier inoxydable, qui est rendue solidaire du câble flexible par soudage et une deuxième partie $P_2$ est un bouchon, préférentiellement en duralumin, constitué d'une vis à tête hémisphérique vissée sur la monture. Le microphone MC est inséré dans un cylindre CY, préférentiellement en silicone, pour le protéger des chocs et noyé dans une graisse GR qui assure le couplage acoustique avec le bouchon. Le microphone MC est relié à des fils électriques AL. Les fils électriques AL permettent d'alimenter électriquement le microphone et de récupérer le signal électrique délivré par le microphone. A titre d'exemple non limitatif, trois fils électriques sortent du microphone et sont raccordés, par soudure, à trois fils électriques présents dans le câble flexible FL. Si nécessaire, l'excédent de fils est enroulé. Un des fils électriques d'alimentation peut être relié électriquement à un fil du câble multi-brins afin de réduire le nombre de fils présents dans le câble flexible.

L'utilisation d'un élément de fermeture équipé d'un microphone se produit, par exemple, lors du déploiement en piscine d'un câble flexible. Dans un tel contexte, une localisation acoustique par ultra-sons peut être mise en oeuvre. Le microphone est, par exemple un microphone miniature plus connu sous le nom de microphone MEMS (MEMS pour « *Micro-Electrical-Mechanical Systems* »). Dans un mode de réalisation particulier (non représenté sur les figures), plusieurs microphones peuvent également être disposés en différents endroits à l'intérieur du câble flexible dont le diamètre est alors adapté à la présence des microphones. Il est alors possible de rendre compte du déploiement du câble sous l'eau. La localisation est obtenue, de façon connue en soi, en immergeant au moins trois sources sonores dans la piscine à inspecter. Un mode de fonctionnement possible est de faire émettre séquentiellement, par chaque source, un signal sonore impulsionnel et périodique à une fréquence arbitraire, par exemple proche de 20 kHz, afin de réduire les recouvrements sonores dus aux échos sur les parois. Les trois signaux reçus séquentiellement par le (ou les) microphones MEMS logés dans le câble flexible sont alors synchronisés par rapport aux signaux d'émission respectifs afin d'en déterminer les retards temporels. La distance entre un microphone logé dans le câble flexible et le repère local qui porte les trois sources sonores est alors déterminée à partir des trois retards temporels mesurés et de la vitesse connue du son dans l'eau.

La figure 6 représente un schéma de principe d'une instrumentation de mesure de débit de dose associée au dispositif de détection de radiations de l'invention.

Les faisceaux de fibres optiques qui sortent de l'extrémité du câble flexible FL située à l'opposé du bouchon de fermeture constituent un ensemble de faisceaux de fibres E. Les faisceaux de fibres de l'ensemble E sont reliés à un commutateur optique Q. Le nombre de faisceaux de fibres est égal au nombre de détecteurs $D_i$, par exemple 16. Le commutateur optique Q est relié à un bloc de détection optoélectronique 10. De façon connue en soi, le bloc de détection optoélectronique 10 contient un laser, un photomultiplicateur, un obturateur électromécanique et des filtres servant à filtrer la lumière laser avant stimulation des détecteurs OSL et la luminescence qui résulte de la détection, après collection par les faisceaux de fibres (cf. Magne et al. "Multichannel dosemeter and Al2O3 Optically Stimulated Luminescence fibre sensors for use in radiation therapy - evaluation with electron beams" *Radiat. Prot. Dosim. 131(1), 2008, pp 93-99*).

L'instrumentation décrite en Figure 6 effectue une lecture des différents détecteurs de façon séquentielle. Pour les applications électronucléaires, en démantèlement et en protection radiologique, il faut effectuer des relevés de débits de dose ambiants sous exposition par des sources permanentes non contrôlées. Pour cette raison, une remise à zéro préalable est toujours réalisée avant exposition. Le protocole se déroule alors de la façon suivante :

- Stimulation optique préliminaire effectuant une remise à zéro préalable de l'ensemble des détecteurs OSL,
- Arrêt de la stimulation optique préliminaire et exposition des détecteurs OSL durant un temps T défini par l'utilisateur (quelques minutes, heures, jours, voire semaines ou mois),
- Stimulation optique ultérieure avec lecture des luminescences OSL issus des différents détecteurs OSL et remise à zéro de l'ensemble des détecteurs.

De façon connue en soi, le bloc de détection optoélectronique 10 délivre, à partir des données de lecture des luminescences OSL, des données DB de débit de dose pour chacun des détecteurs OSL.

Un signal OSL élémentaire détecté par le bloc 10 est constitué d'une impulsion OSL et d'une ligne de base. La ligne de base est un signal qui résulte de la contribution de différents phénomènes, à savoir :

- bruit de fond du détecteur OSL,
- fluorescence des pièges profonds du cristal détecteur OSL,

- scintillation et effet Cerenkov dans la fibre qui propage l'impulsion OSL, lesquels sont fonction du caractère rayonnant de l'environnement présent autour du câble flexible.

L'impulsion OSL atteint un minimum asymptotique au bout d'un temps de lecture $T_{OSL}$, dès lors que l'essentiel des pièges présents dans le cristal détecteur ont été vidés (typiquement 99,9%). On réalise alors une mesure de la valeur moyenne du minimum asymptotique sur les derniers points d'enregistrement. Cette valeur moyenne est alors soustraite du signal impulsionnel OSL sur toute la période $T_{OSL}$. Le signal corrigé qui résulte de cette soustraction est indépendant des perturbations extérieures et, notamment, de l'effet Cerenkov. Le signal corrigé est alors intégré sur toute la bande temporelle puis pondéré par un coefficient de calibrage pour en déduire la dose D intégrée sur toute la durée d'exposition. Le débit de dose moyen DdD est alors estimé en divisant la dose D par la durée d'exposition T :

$$DdD = D \ / \ T$$

L'utilisateur peut réaliser une séquence d'acquisition périodique ou bien une seule mesure. Dans le cas où l'utilisateur réalise plusieurs acquisitions de façon périodique, le protocole se réduit avantageusement à deux phases (exposition et stimulation optique) puisque la stimulation optique réalise la remise à zéro pour la mesure suivante.

De même, l'utilisateur peut réaliser plusieurs relevés sur plusieurs câbles en parallèle dans l'objectif de gagner du temps sur la dosimétrie globale d'une installation. Cette option est particulièrement avantageuse en environnement faiblement dosant, avec des durées d'exposition élevées (de l'ordre de la journée, voire de la semaine ou du mois). Dans ce cas, les opérations de remise à zéro sont horodatées pour toutes les lignes analysées en parallèle.

La déconnexion du câble flexible permet à l'opérateur de sortir de zone pendant la phase d'exposition. Cette phase a donc peu d'impact sur l'exposition du personnel et sa durée peut être choisie aussi longue qu'il est nécessaire, le mode de fonctionnement en parallèle permettant de gagner du temps sur la lecture.

Dans un mode de réalisation préférentiel de l'invention, une fibre cristalline OSL de 0,5 mm de diamètre et de 5 mm de longueur constitue un compromis intéressant. La résolution en dose est estimée à environ 0,7 mGy avec des cristaux $Al_2O_3$:C. A titre d'exemple non limitatif, pour une durée d'exposition de 18 heures, la résolution en débit de dose moyen est de 0,7 mGy/18h soit 40 $\mu$Gy/h. Une telle durée peut alors être obtenue aisément en déclenchant l'intégration en fin de journée vers 16h00 et en effectuant les lectures de doses le lendemain matin vers 10h00. Toujours à titre d'exemple, il est également possible d'intégrer, durant une semaine entière (i.e. 168 heures), des données de mesure lors d'une fin de chantier d'assainissement. La résolution en débit de dose est alors de l'ordre de 0,7 mGy/168 h, soit 4 $\mu$Gy/h.

Le dispositif de détection de l'invention permet avantageusement d'atteindre une dynamique élevée en terme de débit de dose (5 à 7 décades) grâce à la combinaison de la gamme de dose (3 à 4 décades) et de la gamme de durée d'exposition (2 à 3 décades).

L'intérêt d'un câble sensible 1-D est de réaliser un relevé de plusieurs mesures en différents points (cartographie linéaire de l'activité) de façon simultanée afin de gagner du temps dans la dosimétrie. En effet, les lectures peuvent alors être réalisées simultanément en différents endroits et non plus séquentiellement comme c'est le cas en déplaçant un capteur ponctuel sur toute la scène à analyser.

La figure 7 représente un système de détection de radiations dans une installation qui utilise un dispositif de détection conforme au dispositif de l'invention. De façon générale, l'installation peut être une installation contaminée ou une installation qui, sans être contaminée, est exposée à des radiations. Dans l'exemple de la figure 7, l'installation I est une installation contaminée qui doit, en conséquence, être décontaminée.

L'installation à décontaminer I comprend, par exemple, une conduite 11 et une cuve 12 dans laquelle débouche la conduite 11. Le câble flexible FL équipé de détecteurs est introduit dans la conduite 11 à partir d'une zone ZA non contaminée qui est accessible aux utilisateurs. Le câble flexible FL est introduit dans l'installation I à l'aide d'un dispositif de propulsion qui comprend un tube d'injection 13, un moteur 14 équipé d'un levier de commande 15, un touret 16 sur lequel le câble flexible est enroulé et des moyens mécaniques d'entraînement 17 qui relient le moteur au touret. Le touret 16 est équipé d'un connecteur multi-fibres 18 qui relie les deuxièmes extrémités des fibres optiques épanouies qui débouchent du câble flexible à une instrumentation de mesure. L'instrumentation de mesure comprend, par exemple, un câble optique multi-fibres 19, un connecteur multi-voies 20 et une unité de mesure 21.

L'objectif est de réaliser des relevés de débit de dose à l'intérieur de la conduite et de la cuve et, ainsi, de suivre l'évolution du procédé d'assainissement. L'installation I demeure inaccessible aussi longtemps que l'assainissement n'est pas terminé.

Comme cela est décrit ci-dessous, les mesures se déroulent en trois phases.

Phase 1 : Propulsion du câble

L'opérateur a préalablement déconnecté le câble optique multifibres 19 du touret. En cas d'oubli, la présence du connecteur dans son logement empêche la mise en marche du moteur.

L'extrémité du câble flexible FL initialement enroulé autour du touret 16 est engagée dans le tube d'injection 13. Le tube d'injection 13 est relié à l'entrée de la conduite 11. Lorsque l'opérateur enclenche le levier de commande 15 en position « propulsion », la rotation du moteur 14 est activée à vitesse contrôlée et les moyens mécaniques d'entraînement 17 mettent le touret en rotation. Le câble flexible FL est alors propulsé dans la conduite 11.

Des galets d'entraînement sont utilisés pour la propulsion du câble flexible. La pression d'entrainement des galets est ajustable jusqu'à une valeur maximale fonction de la résistance du câble. Par exemple, pour un câble résistant à 200 kg, l'effort maximal pourra être limité à 50 kg afin de prendre en compte un coefficient de sécurité. En cas de blocage dû, par exemple, à une diminution imprévue de la section de la conduite, il y a arrêt naturel de la propulsion et sauvegarde du câble sitôt que la force de réaction est supérieure à la force de frottement. L'opérateur doit alors arrêter l'opération de propulsion pour analyser la cause du blocage.

Lorsque le câble est intégralement déployé, le noyau servant de butée d'arrêt impacte le tube d'injection 13 et bloque le câble pour éviter de détruire la liaison optique adaptée sur le moyeu du touret. Les galets d'entrainement se mettent alors à patiner et l'opérateur doit alors couper le moteur et passer au point mort.

Phase 2 : Exposition et relevé de débits

Lorsque le câble flexible atteint la position voulue, que le câble soit ou non entièrement déroulé, l'opérateur met le moteur au point mort.

L'opérateur raccorde alors l'instrumentation de mesure 19, 20, 21 au connecteur 18 logé dans le moyeu du touret. Comme cela a été mentionné précédemment en référence à la figure 6, l'instrumentation de mesure comprend des moyens aptes à stimuler optiquement les détecteurs OSL. La stimulation optique des détecteurs OSL peut donc être effectuée. De façon préférentielle, la connexion de l'instrumentation de mesure au connecteur 18 désactive l'alimentation du moteur et empêche la rotation de celui-ci.

L'opérateur peut alors soit laisser l'instrumentation de mesure connectée et attendre la fin de l'exposition, soit déconnecter l'instrumentation de mesure pour réaliser la stimulation optique d'autres câbles flexibles.

Dans tous les cas, à la fin de la durée d'exposition, l'instrumentation de mesure doit être connectée au connecteur 18 afin que les luminescences qui résultent de la détection de radiations nucléaires soient lues. Dans le cas - non souhaité - où l'opérateur oublie de connecter l'instrumentation de mesure et déclenche malgré tout l'acquisition de données, rien ne se passe puisque le câble flexible FL n'est pas connecté. L'utilisateur n'observe alors aucun signal et un message d'erreur apparaît sur l'écran l'informant de l'anomalie. Il est alors demandé à l'opérateur de connecter l'instrumentation de mesure et de faire une lecture. Sur la base des données de luminescence lues, l'unité de calcul 20 calcule les débits de dose.

Phase 3 : Rembobinage du câble

Une fois les luminescences lues, l'opérateur déconnecte à nouveau le câble multifibres 19 du touret ce qui permet à nouveau de faire tourner le moteur. L'opérateur peut alors enclencher le rembobinage du câble sur le touret en actionnant le levier 15 en position « rembobinage ». Cette opération est réalisée par la mise en rotation d'un second moyeu entrainant une courroie qui transmet l'effort de rotation au touret. Le touret est alors mis en rotation dans le sens inverse du sens de la phase 1 et le câble flexible FL est rembobiné, préférentiellement en « zig-zag » (combinaison d'un mouvement de rotation et d'un mouvement de translation alternés) pour répartir le câble de façon homogène sur toute la surface du touret. D'autres protocoles de rembobinage peuvent également être envisagés.

Il est avantageusement possible de déconnecter facilement l'instrumentation de mesure du câble flexible FL, que ce soit en phase de propulsion/rembobinage ou en phase d'exposition aux radiations. L'instrumentation de mesure peut alors être réutilisée pour faire des mesures avec d'autres câbles préalablement propulsés dans d'autres conduites dans le but de gagner du temps dans le suivi de la contamination de l'installation dans son ensemble.

De façon avantageuse, des mesures de température peuvent être effectuées en parallèle, si cela s'avère nécessaire, grâce à une fibre monomode présente dans le câble optique multi-fibres 19 et reliée, via le connecteur 18, à la fibre monomode qui contient les réseaux de Bragg présent dans le câble flexible. De même, lorsque cela s'avère nécessaire, par exemple pour des mesures en piscine, un connecteur électrique (non représenté sur la figure) récupère le signal provenant du (ou des) microphone(s) incorporé(s) dans le câble flexible FL.

Le câble optique multi-fibres 19 est connecté sur le connecteur 18 solidaire du touret. Le câble optique 19 est déconnecté lors des phases de propulsion et de rembobinage étant donné que le touret est mis en rotation lors de ces deux phases. Dans un mode de réalisation, le câble optique 19 comporte un noyau (deux demi-coques) vissé en partie terminale (à quelques dizaines de centimètres de l'extrémité) qui sert de butée mécanique. Le déroulement du câble, guidé par un tube guide en sortie du touret, est alors naturellement bloqué lorsque le noyau impacte le tube guide. Par ailleurs, un capteur de présence du connecteur enfiché déclenche une sécurité empêchant la mise en marche du moteur en cas d'oubli. La présence du connecteur désactive l'alimentation du moteur et empêche ainsi celui-ci de tourner (et donc de détruire le câble optique).

L'intérêt logistique du câble flexible équipé de détecteurs OSL de l'invention va maintenant être décrit.

L'usage du câble 1-D de l'invention permet de gagner du temps sur la dosimétrie globale de l'installation étudiée et contribue en conséquence, indirectement, à optimiser le coût d'une opération d'assainissement. Ce mode opératoire est particulièrement intéressant du point de vue logistique en environnements faiblement « dosants » caractérisés par des temps d'exposition élevés (de l'ordre de la journée à la semaine).

L'utilisateur peut réaliser des relevés curvilignes 1-D à l'aide d'un seul câble. Dans ce cas, le câble 1-D peut rester connecté à son instrumentation de lecture ou bien être déconnecté, ce qui permet à l'opérateur de sortir de zone pendant la phase d'exposition. A titre d'exemple non limitatif, pour 16 points de mesure simultanés relevés avec un câble flexible, la durée totale DT d'une opération de dosimétrie OSL 1-D est :

$$DT = T + 32 \times T_{OSL},$$

où

T est la durée d'exposition (par exemple quelques dizaines de minutes, plusieurs heures, plusieurs jours ou plusieurs semaines), et

$T_{OSL}$ est la durée de lecture et remise à zéro des détecteurs OSL (typiquement de l'ordre de quelques dizaines de secondes).

L'utilisateur peut également procéder à des relevés 2-D en déployant N câbles flexibles 1-D en parallèle, par exemple 8 câbles. Dans ce cas, les N câbles 1-D sont déployés et déconnectés simultanément et les opérations de remise à zéro et de lecture sont horodatées pour toutes les courbes analysées en parallèle. La durée totale DT de l'opération de dosimétrie OSL 2-D est alors, pour 16 points de mesure simultanés relevés avec un câble flexible:

$$DT = T + 32 \times 8 \times T_{OSL},$$

soit

$$DT = T + 256 \times T_{OSL}$$

Considérons un débit de dose de 6mGy/h. En adoptant une durée d'exposition de 2 heures, la résolution de mesure par OSL du débit de dose vaut sensiblement 0,25 mGy/h (SNR = 24). La durée totale de l'opération de dosimétrie OSL est alors de 2,25 heures pour 16 points de mesure en 1-D et de 4,1 h pour 128 points de mesure en 2-D.

Il est possible de comparer ces durées de dosimétrie OSL à la durée d'une dosimétrie conventionnelle ponctuelle (0-D) réalisée à l'aide d'un détecteur CZT miniature (quelques mm³) pouvant être inséré et déplacé dans une conduite. La durée d'acquisition est de l'ordre de 15 minutes pour un débit de dose typique de 6mGy/h (cf. A. Rocher, N. Blanc de Lanaute « Caractérisations par spectrométrie gamma Cd-Zn-Te de la contamination des circuits des centrales nucléaires », Congrès SFRP 2013, Paris). En conséquence, la durée de dosimétrie avec le détecteur CZT est-elle de 4 heures (16x15 minutes = 4 h) en 1-D et de 32 heures (128x15 min = 32 h) en 2-D.

A performance équivalente, la dosimétrie OSL 1-D/2-D réalisée avec le dispositif de l'invention est donc plus rapide que la dosimétrie 0-D réalisée avec un détecteur CZT. Par ailleurs, la mesure conventionnelle 0-D nécessite un opérateur d'astreinte en permanence sur le terrain puisque les lectures s'effectuent de manière séquentielle. En contrepartie, la méthodologie OSL repose sur un mode de lecture quasi-simultanée de tous les détecteurs en même temps de manière automatisée. Ainsi, la présence d'un opérateur n'est requise que pour le déclenchement du protocole de lecture OSL.

Cette méthodologie OSL parallèle permet ainsi de gagner du temps dans l'opération de dosimétrie proprement dite mais aussi en temps d'opérateur.

Parallèlement à l'intérêt économique de l'utilisation du dispositif de détection de l'invention, une cartographie linéaire de l'activité permet de réduire l'incertitude de mesure d'origine statistique, pour un temps de mesure identique à celui d'un détecteur unique déplacé. En effet, considérons un détecteur ponctuel (0-D) unique délivrant une mesure de débit de dose avec une incertitude donnée au bout d'un temps d'exposition T. Il faut donc un temps total N x T pour analyser les N points de mesure de la scène.

En contrepartie, considérons maintenant le cas d'un câble constitué de N détecteurs exposés simultanément pendant la même durée d'exposition T. La statistique de mesure est alors la même et le temps de mesure est réduit par un facteur N. Ce même câble exposé pendant une durée N x T délivre alors une mesure de débit de dose avec une incertitude améliorée d'un facteur

$$\frac{1}{\sqrt{N}}$$

par rapport à un détecteur unique déplacé.

A durée de dosimétrie identique d'une scène, la mesure 1-D permet ainsi d'améliorer les résultats de mesures de débits de dose. Pour 16 points, l'incertitude de mesure est, par exemple, améliorée par un facteur 4. Pour une pluralité de 8 câbles à 16 détecteurs exposés simultanément, l'incertitude de mesure est, par exemple, améliorée par un facteur 11 par rapport à un détecteur unique.

## Revendications

1. Dispositif de détection de radiations comprenant au moins deux détecteurs ($D_i$) de radiations distribués

en série le long d'un câble support (MB), **caractérisé en ce que** chaque détecteur (D$_i$) comprend un élément de détection à luminescence stimulée optiquement (9) couplé optiquement à au moins une fibre optique (F$_i$), chaque élément de détection à luminescence stimulée optiquement (9) étant maintenu en vis-à-vis d'une première extrémité de la fibre optique par une pièce mécanique (d) fixée sur le câble support (MB), la pièce mécanique (d) étant maintenue dans un câble flexible (FL) par des moyens de maintien (S, F$_k$, F$_l$, F$_j$) qui comprennent un cylindre porteur (S) fait d'une matière solide déformable sur lequel les fibres optiques sont enroulées, les deuxièmes extrémités de chaque fibre optique débouchant à une même première extrémité du câble flexible (FL).

2. Dispositif selon la revendication 1, dans lequel la pièce mécanique (d) qui enserre le câble support (MB) comprend un premier alésage et un deuxième alésage alignés l'un avec l'autre, l'élément de détection à luminescence stimulée optiquement (9) étant fixé dans le premier alésage et la fibre optique (F$_i$) étant fixée dans le deuxième alésage.

3. Dispositif selon la revendication 1 ou la revendication 2, dans lequel les fibres optiques sont enroulées en hélice.

4. Dispositif selon l'une quelconque des revendications précédentes, dans lequel la matière solide déformable est un polymère.

5. Dispositif selon l'une quelconque des revendications précédentes, dans lequel une pluralité de fibres optiques sont couplées à un même élément de détection à luminescence stimulée optiquement (9), la pluralité de fibres optiques étant regroupées dans un tuyau capillaire (K) sous la forme d'un faisceau de fibres optiques (F$_i$).

6. Dispositif selon l'une quelconque des revendications précédentes, dans lequel une couche de graisse (G) recouvre une paroi intérieure du câble flexible.

7. Dispositif selon l'une quelconque des revendications précédentes, dans lequel une couche de polymère (R) recouvre une paroi extérieure du câble flexible.

8. Dispositif selon l'une quelconque des revendications précédentes, dans lequel une fibre optique monomode contenant une pluralité de réseaux de Bragg (B) est fixée dans la pièce mécanique (d), la fibre optique ayant une extrémité débouchant à la première extrémité du câble flexible (FL).

9. Dispositif selon l'une quelconque des revendications précédentes, dans lequel le câble support (MB) est un fil multi-brins.

10. Dispositif selon l'une quelconque des revendications précédentes, dans lequel le câble flexible (FL) est un tube métallique agrafé.

11. Dispositif selon l'une quelconque des revendications précédentes, dans lequel une deuxième extrémité du câble flexible (FL), opposée à la première extrémité, est fermée par un embout (EB).

12. Dispositif selon la revendication 11, dans lequel l'embout comprend un microphone (MC).

13. Système de détection de radiations dans une installation (I), le système comprenant un dispositif de détection de radiations et des moyens pour introduire le dispositif de détection de radiations dans l'installation (I), **caractérisé en ce que** le dispositif de détection de radiations est un dispositif selon l'une quelconque des revendications 11 ou 12 et **en ce que** les moyens pour introduire le dispositif de détection de radiations dans l'installation (I) comprennent un touret (16) sur lequel le câble flexible (FL) est enroulé, un tube d'injection (13) qui s'ouvre dans l'installation et dans lequel l'embout du câble flexible est engagé et des moyens (14, 15) aptes à propulser le câble flexible (FL) dans l'installation.

14. Système de détection selon la revendication 13, dans lequel les moyens (14, 15) aptes à propulser le câble flexible (FL) dans l'installation comprennent un moteur (14) et des moyens mécaniques (17) reliés au moteur aptes à mettre le touret (16) en rotation dès lors qu'une commande de propulsion est appliquée au moteur.

15. Système de détection selon la revendication 13 ou 14, dans lequel un connecteur multi-fibres (18) fixé sur le touret (16) relie les deuxièmes extrémités des fibres optiques à une instrumentation de mesure (19, 20, 21) apte à stimuler les éléments de détection à luminescence stimulée optiquement (9) et à lire une luminescence qui résulte de l'exposition aux radiations.

**Patentansprüche**

1. Vorrichtung zur Erfassung von Strahlungen, umfassend wenigstens zwei Strahlungsdetektoren (D$_i$), die in Reihe entlang eines Tragkabels (MB) verteilt sind, **dadurch gekennzeichnet, dass** jeder Detektor (D$_i$) ein Element zur Erfassung mittels optisch stimulierter Lumineszenz (9) umfasst, das optisch mit wenigstens einer optischen Faser (F$_i$) gekoppelt ist, wobei jedes Element zur Erfassung mittels optisch stimulierter Lumineszenz (9) gegenüber einem ersten Ende der optischen Faser mittels eines mechanischen Elements (d) gehalten wird, das an dem Tragkabel (MB) befestigt ist, wobei das mechanische Element (d) in einem flexiblen Kabel (FL) mittels Haltemitteln (S, $F_k$, $F_i$, $F_j$) gehalten wird, die einen Tragzylinder (S) umfassen, der aus einem verformbaren festen Material hergestellt ist, auf den die optischen Fasern aufgewickelt sind, wobei die zweiten Enden jeder optischen Faser an ein und demselben ersten Ende des flexiblen Kabels (FL) münden.

2. Vorrichtung nach Anspruch 1, bei der das mechanische Element (d), das das Tragkabel (MB) umschließt, eine erste Bohrung und eine zweite Bohrung umfasst, die zueinander ausgerichtet sind, wobei das Element zur Erfassung mittels optisch stimulierter Lumineszenz (9) in der ersten Bohrung befestigt ist, und die optische Faser ($F_i$) in der zweiten Bohrung befestigt ist.

3. Vorrichtung nach Anspruch 1 oder Anspruch 2, bei der die optischen Fasern helixförmig aufgewickelt sind.

4. Vorrichtung nach einem der vorhergehenden Ansprüche, bei der das verformbare feste Material ein Polymer ist.

5. Vorrichtung nach einem der vorhergehenden Ansprüche, bei der eine Mehrzahl von optischen Fasern mit ein und demselben Element zur Erfassung mittels optisch stimulierter Lumineszenz (9) gekoppelt sind, wobei die Mehrzahl von optischen Fasern in einem Kapillarrohr (K) in der Form eines Bündels von optischen Fasern ($F_i$) zusammengefasst sind.

6. Vorrichtung nach einem der vorhergehenden Ansprüche, bei der eine Fettschicht (G) eine Innenwand des flexiblen Kabels bedeckt.

7. Vorrichtung nach einem der vorhergehenden Ansprüche, bei der eine Polymerschicht (R) eine Außenwand des flexiblen Kabels bedeckt.

8. Vorrichtung nach einem der vorhergehenden Ansprüche, bei der eine optische Monomodenfaser, die eine Mehrzahl von Bragggittern (B) enthält, in dem mechanischen Element (d) befestigt ist, wobei die optische Faser ein Ende hat, das an dem ersten Ende des flexiblen Kabels (FL) mündet.

9. Vorrichtung nach einem der vorhergehenden Ansprüche, bei der das Tragkabel (MB) ein mehradriger Draht ist.

10. Vorrichtung nach einem der vorhergehenden Ansprüche, bei der das flexible Kabel (FL) ein gefalztes Metallrohr ist.

11. Vorrichtung nach einem der vorhergehenden Ansprüche, bei der ein zweites Ende des flexiblen Kabels (FL), das zu dem ersten Ende entgegengesetzt ist, durch ein Ansatzstück (EB) geschlossen ist.

12. Vorrichtung nach Anspruch 11, bei der das Ansatzstück ein Mikrofon (MC) umfasst.

13. System zur Erfassung von Strahlungen in einer Anlage (I), wobei das System eine Vorrichtung zur Erfassung von Strahlungen sowie Mittel zum Einbringen der Vorrichtung zur Erfassung von Strahlungen in die Anlage (I) umfasst, **dadurch gekennzeichnet, dass** die Vorrichtung zur Erfassung von Strahlungen eine Vorrichtung nach einem der Ansprüche 11 oder 12 ist, und dass die Mittel zum Einbringen der Vorrichtung zur Erfassung von Strahlungen in die Anlage (I) eine Trommel (16) umfassen, auf der das flexible Kabel (FL) aufgewickelt ist, ferner ein Injektionsrohr (13), das sich in die Anlage öffnet und in das das Ansatzstück des flexiblen Kabels eingreift, sowie Mittel (14, 15), die dazu ausgelegt sind, das flexible Kabel (FL) in die Anlage vorwärts zu bewegen.

14. System zur Erfassung nach Anspruch 13, bei dem die Mittel (14, 15), die dazu ausgelegt sind, das flexible Kabel (FL) in die Anlage vorwärts zu bewegen, einen Motor (14) und mechanische Mittel (17) umfassen, die mit dem Motor verbunden und dazu ausgelegt sind, die Trommel (16) in Drehung zu versetzen, sobald ein Vorwärtsbewegungsbefehl an den Motor angelegt wird.

15. System zur Erfassung nach Anspruch 13 oder 14, bei dem ein an der Trommel (16) befestigter Vielfaserverbinder (18) die zweiten Enden der optischen Fasern mit einem Messinstrument (19, 20, 21) verbindet, das dazu ausgelegt ist, die Elemente zur Erfassung mittels optisch stimulierter Lumineszenz (9) zu stimulieren und eine Lumineszenz auszulesen, die aus der Exposition gegenüber Strahlungen resultiert.

### Claims

1. A radiation-detecting device comprising at least two radiation detectors ($D_i$) distributed in series along a support cable (MB), **characterised in that** each detector ($D_i$) comprises an optically stimulated luminescence detection element (9) which is optically coupled to at least one optical fibre ($F_i$), each optically stimulated luminescence detection element (9) being held opposite a first end of the optical fibre by a mechanical part (d) fixed to the support cable (MB), the mechanical part (d) being held in a flexible cable (FL) by holding means (S, $F_k$, $F_l$, $F_j$) which comprise a carrier cylinder (S) made of a deformable solid material on which the optical fibres are wound, the second ends of each optical fibre leading to the same first end of the flexible cable (FL).

2. The device according to claim 1, wherein the mechanical part (d) which encloses the support cable (MB) comprises a first bore and a second bore aligned with each other, the optically stimulated luminescence detection element (9) being fixed in the first bore and the optical fibre ($F_i$) being fixed in the second bore.

3. The device according to claim 1 or claim 2, wherein the optical fibres are helically wound.

4. The device according to any one of the preceding claims, wherein the deformable solid material is a polymer.

5. The device according to any one of the preceding claims, wherein a plurality of optical fibres is coupled to the same optically stimulated luminescence detection element (9), the plurality of optical fibres being gathered in a capillary pipe (K) as a beam of optical fibres ($F_i$).

6. The device according to any one of the preceding claims, wherein a grease layer (G) covers an internal wall of the flexible cable.

7. The device according to any one of the preceding claims, wherein a polymer layer (R) covers an external wall of the flexible cable.

8. The device according to any one of the preceding claims, wherein a single mode optical fibre containing a plurality of fibre Bragg gratings (B) is fixed in the mechanical part (d), the optical fibre having an end leading to the first end of the flexible cable (FL).

9. The device according to any one of the preceding claims, wherein the support cable (MB) is a multi-strand wire.

10. The device according to any one of the preceding claims, wherein the flexible cable (FL) is an interlocked metal hose.

11. The device according to any one of the preceding claims, wherein a second end of the flexible cable (FL), opposite the first end, is closed by a tip (EB).

12. The device according to claim 11, wherein the tip comprises a microphone (MC).

13. A radiation-detecting system in a facility (I), the system comprising a radiation-detecting device and means for introducing the radiation-detecting device into the facility (I), **characterised in that** the radiation-detecting device is a device according to any of claims 11 or 12 and **in that** the means for introducing the radiation-detecting device into the facility (I) comprise a turntable (16) on which the flexible cable (FL) is wound, an injecting tube (13) which opens into the facility and in which the tip of the flexible cable is engaged and means (14, 15) able to propel the flexible cable (FL) into the facility.

14. The detecting system according to claim 13, wherein the means (14, 15) able to propel the flexible cable (FL) into the facility comprise a motor (14) and mechanical means (17) connected to the motor and able to rotate the turntable (16) once a propulsion control is applied to the motor.

15. The detecting system according to claim 13 or 14, wherein a multi-fibre connector (18) fixed to the turntable (16) connects both ends of the optical fibres to a measuring instrumentation (19, 20, 21) able to stimulate the optically stimulated luminescence detection elements (9) and to read a luminescence which results from radiation exposure.

# Fig. 1

# Fig. 2

**Fig. 3**

**Fig. 4A**

**Fig. 4B**

EP 3 152 595 B1

Fig. 4C

Fig. 4D

**Fig. 5A**

**Fig. 5B**

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5665972 A

**Littérature non-brevet citée dans la description**

- **S. MELLE et al.** Practical fiber-optic Bragg grating strain gauge system. *Appl. Opt.,* 1993, vol. 32 (19), 3601-3609
- **MAGNE et al.** Multichannel dosemeter and Al2O3 Optically Stimulated Luminescence fibre sensors for use in radiation therapy - evaluation with electron beams. *Radiat. Prot. Dosim.,* 2008, vol. 131 (1), 93-99
- **A. ROCHER ; N. BLANC DE LANAUTE.** Caractérisations par spectrométrie gamma Cd-Zn-Te de la contamination des circuits des centrales nucléaires. *Congrès SFRP,* 2013